# EUROPÄISCHE PATENTSCHRIFT

(11) **EP 1 651 328 B1**
(45) Veröffentlichungstag und Bekanntmachung des Hinweises auf die Patenterteilung: **28.03.2007**
(21) Anmeldenummer: 04763873.9
(22) Anmeldetag: 06.08.2004
(51) Int. Cl.: B01D 35/30

(54) **FLÜSSIGKEITSFILTER FÜR EINE BRENNKRAFTMASCHINE**
LIQUID FILTER FOR AN INTERNAL COMBUSTION ENGINE
FILTRE A LIQUIDE POUR MOTEUR A COMBUSTION INTERNE

(30) Priorität: 09.08.2003 DE 20312318 U
(43) Veröffentlichungstag der Anmeldung: 03.05.2006
(73) Patentinhaber: Hengst GmbH & Co. KG, 48147 Münster (DE)
(72) Erfinder: ARDES, Wilhelm, 59387 Ascheberg (DE)
(74) Vertreter: Schulze Horn & Partner
(86) Internationale Anmeldenummer: PCT/EP2004/008840
(87) Internationale Veröffentlichungsnummer: WO 2005/014140

(56) Entgegenhaltungen:
- DE-A- 19 701 066
- DE-C- 4 242 997

## Beschreibung

Die vorliegende Erfindung betrifft einen Flüssigkeitsfilter, insbesondere Öl- oder Kraftstoffilter für eine Brennkraftmaschine, mit einem Filtersockel, der mit einem Anschlußflansch ausgebildet ist, der mit einem Gegenflansch an einer zugehörigen Einrichtung, insbesondere an einer Brennkraftmaschine, dichtend verbindbar ist, wobei durch die Flanschverbindung mindestens je ein Flüssigkeitskanal für die Zuführung von zu filternder Flüssigkeit von der Einrichtung zum Flüssigkeitsfilter und für die Abführung von gefiltertem Flüssigkeit vom Filter zur Einrichtung verläuft, wobei im Filtersockel zumindest ein Abschnitt wenigstens eines Flüssigkeitskanals zum Gegenflansch hin durch eine Dichtplatte verschließbar ist, die mit mindestens einer gegen den Gegenflansch abgedichteten, mit einem einrichtungsseitigen Flüssigkeitskanal fluchtenden Durchlaßöffnung ausgebildet ist.

Ein Flüssigkeitsfilter der vorstehend genannten Art ist aus DE 42 42 997 C1 bekannt. Bei diesem als Ölfilter dienenden Flüssigkeitsfilter ist zwischen dem Anschlußflansch einer Brennkraftmaschine und dem Anschlußflansch des Filtersockels des Flüssigkeitsfilters eine Dichtplatte in Form einer im wesentlichen durchgehenden Platte angeordnet, die mit wenigstens zwei Durchbrechungen für die Durchleitung von Flüssigkeit ausgestattet ist. Die Außenkontur der Dichtplatte entspricht dabei der Außenkontur der Anschlußflansche von Brennkraftmaschine und Filtersockel. Weiterhin ist bei diesem bekannten Flüssigkeitsfilter bevorzugt vorgesehen, daß die Dichtplatte auf ihrer dem Anschlußflansch der Brennkraftmaschine zugewandten Seite Dichtstege trägt, die mit den Dichtstegen des Anschlußflansches der Brennkraftmaschine korrespondieren, und daß die Dichtplatte an ihrer dem Flüssigkeitsfiltersockel zugewandten Seite Dichtstege trägt, die mit den Dichtstegen des Flüssigkeitsfiltersockels korrespondieren. Die Dichtplatte dient dazu, ein auf der Seite der Brennkraftmaschine von deren Hersteller vorgegebenes Anschlußbild des Anschlußflansches, das in der Regel nicht dem idealen Anschlußbild für den Flüssigkeitsfilter entspricht, für den Anschluß des Flüssigkeitsfilters geeignet zu machen.

Als nachteilig wird bei diesem bekannten Flüssigkeitsfilter angesehen, daß die Dichtplatte einen zusätzlichen Einbauraum beansprucht, da der Flüssigkeitsfilter infolge der zwischengeschalteten Dichtplatte um ein Maß, das der Dicke der Dichtplatte entspricht, von der Brennkraftmaschine wegrückt. Dies kann in manchen Anwendungsfällen schon zu Platzproblemen führen, insbesondere im Motorraum von modernen Kraftfahrzeugen. Weiterhin ist die Dichtplatte ein relativ aufwendig herzustellendes Bauteil, das auf beiden Seiten mit unterschiedlich verlaufenden Dichtstegen versehen werden muß. Zudem muß die Dichtplatte als separates Bauteil zugeliefert und montiert werden, was zusätzlichen Aufwand und zusätzliche Kosten verursacht. Wenn die Dichtplatte, was bisher aus Stabilitätsgründen der Fall ist, aus Metall hergestellt wird, trägt sie zudem merklich zu einem hohen Gesamtgewicht des Flüssigkeitsfilters einschließlich Dichtplatte bei, was dem Ziel einer möglichst weitgehenden Gewichtseinsparung widerspricht.

Für die vorliegende Erfindung stellt sich deshalb die Aufgabe, einen Flüssigkeitsfilter der eingangs genannten Art zu schaffen, der die angegebenen Nachteile vermeidet und bei dem insbesondere eine kompaktere Bauweise, ein geringeres Gewicht und eine einfachere und damit kostengünstigere Herstellbarkeit erreicht werden.

Die Lösung dieser Aufgabe gelingt erfindungsgemäß mit einem Flüssigkeitsfilter der eingangs genannten Art, der dadurch gekennzeichnet ist, daß in der Ebene der Flanschverbindung gesehen die Fläche der Dichtplatte kleiner ist als die Fläche des Anschlußflansches und daß die Dichtplatte dichtend in den Filtersockel eingesetzt ist und einen Teil des Filtersockels bildet.

Vorteilhaft wird bei dem erfindungsgemäßen Flüssigkeitsfilter nur noch eine in ihrer Fläche verkleinerte Dichtplatte benötigt, die zudem noch in den Filtersockel integriert ist. Außerdem muß diese Dichtplatte nur so groß sein, wie es das Anschlußbild erfordert, wodurch die Fläche der Dichtplatte auf ein Minimalmaß begrenzt wird. Dabei werden durch die Dichtplatte die Baugröße des Flüssigkeitsfilters und der dafür benötigte Einbauraum nicht vergrößert und die Dichtplatte trägt nur noch sehr wenig zum Gesamtgewicht des Flüssigkeitsfilters einschließlich der Dichtplatte bei. Damit kann vorteilhaft neben der kompakteren Bauweise noch eine Gewichtseinsparung erzielt werden. Gleichzeitig wird bei dem erfindungsgemäßen Flüssigkeitsfilter der Vorteil erreicht, daß der Filtersockel des Flüssigkeitsfilters in einem geringeren Maße mit Druckkräften beaufschlagt wird, die in Richtung der Senkrechten zur Ebene der Flanschverbindung infolge des anstehenden Flüssigkeitsdrucks entstehen. Aus diesem Grunde kommt der erfindungsgemäße Flüssigkeitsfilter mit leichteren Befestigungsmitteln und mit einer insgesamt leichteren Konstruktion mit geringeren Wandstärken und/oder mit einem Material geringerer Festigkeit aus, was weitere Kosteneinsparungen ermöglicht.

Als Mindestumfang umfaßt die Flanschverbindung zwei Flüssigkeitskanäle, von denen ein erster Flüssigkeitskanal Flüssigkeit von der zugehörigen Einrichtung zum Flüssigkeitsfilter und ein zweiter Kanal Flüssigkeit vom Flüssigkeitsfilter zur zugehörigen Einrichtung führt. Bevorzugt ist gemäß Erfindung aber vorgesehen, daß durch die Flanschverbindung als dritter Flüssigkeitskanal ein druckloser Ablaßkanal für eine Entleerung des Flüssigkeitsfilters bei einem Filtereinsatzwechsel verläuft. Diese Ausführung des Flüssigkeitsfilters erlaubt eine Ausgestaltung mit einer vorzugsweise automatischen Entleerung des Filtergehäuses bei einem Filtereinsatzwechsel. Gleichzeitig wird die auf den Filtersockel wirkende Kraft durch den Flüssigkeitsdruck im Betrieb der zugehörigen Einrichtung durch die Integration des weiteren Flüssigkeitskanals nicht erhöht.

In einer Weiterbildung der Erfindung wird vorgeschlagen, daß zwei oder drei separate Dichtplatten vorgesehen sind, wobei jeweils eine Dichtplatte einem oder zwei der durch die Flanschverbindung verlaufenden Flüssigkeitskanäle zugeordnet ist. Die Verwendung mehrerer Dichtplatten kann im Vergleich zu einer einzigen großen Dichtplatte das Einsetzen und Abdichten der einzelnen Dichtplatten im Filtersockel erleichtern, so daß mit dieser Ausführung des Flüssigkeitsfilters eine erhöhte Zuverlässigkeit hinsichtlich der Dichtigkeit der in den Sockel eingesetzten Dichtplatten erzielt werden kann.

Um ein besonders geringes Gewicht des Flüssigkeitsfilters zu erreichen, sieht eine Ausführung der Erfindung vor, daß der Filtersockel und die Dichtplatte (n) Teile aus Kunststoff sind und daß die Dichtplatte(n) mit dem übrigen Filtersockel durch Schweißen oder Kleben verbunden ist/sind. Der Einsatz von Kunststoff als Material für den Filtersockel und die Dichtplatte(n) ermöglicht vorteilhaft zudem eine Schweiß- oder Klebeverbindung zwischen diesen Teilen, die sowohl für die gewünschte Dichtigkeit als auch für einen festen mechanischen Zusammenhalt sorgt.

In weiterer Ausgestaltung des zuletzt beschriebenen Flüssigkeitsfilters wird vorgeschlagen, daß die Dichtplatte(n) an ihrer Durchlaßöffnung oder ihren Durchlaßöffnungen mit (je) einem in Richtung zur zugehörigen Einrichtung vorragenden, in den maschinenseitigen Flüssigkeitskanal einsteckbaren Stutzen mit einem radial dichtenden Dichtring ausgebildet ist/sind. Der in den einrichtungsseitigen Flüssigkeitskanal einsteckbare Stutzen mit seinem radial dichtenden Dichtring bietet den Vorteil, daß wesentlich geringere axiale Druckkräfte vom Filtersockel aufgenommen werden müssen, was eine Ausführung des Filtersockels aus einem weniger stabilen Material, z.B. aus dem vorstehend genannten Kunststoff, ermöglicht, ohne daß dies mit einem erhöhten Risiko von Leckagen verbunden ist.

Eine alternative Ausführung des Flüssigkeitsfilters sieht vor, daß der Filtersockel und die Dichtplatte(n) Teile aus Kunststoff oder aus Metall sind und daß die Dichtplatte(n) unter Zwischenlage (je) eines umlaufenden, radial oder axial dichtenden Dichtrings in den übrigen Filtersockel eingesteckt und in diesem fixiert ist/sind. In dieser Ausführung ist die Dichtplatte oder sind die Dichtplatten mittels eines Dichtringes in den übrigen Filtersockel eingesteckt, so daß hier die Möglichkeit besteht, bei Bedarf eine Dichtplatte auszuwechseln, beispielsweise bei einer Beschädigung.

Um hohe Kosten für spezielle Dichtungen zu vermeiden, sind bevorzugt die radial dichtenden Dichtringe an den Stutzen und/oder an den Dichtplatten Standard-O-Ringe.

Alternativ können im Bereich der Flanschverbindung auch axial dichtende Dichtmittel zum Einsatz kommen. Hierzu schlägt die Erfindung vor, daß die Dichtplatte(n) an ihrer Durchlaßöffnung oder ihren Durchlaßöffnungen mit (je) einem diese umgebenden, in Richtung zur zugehörigen Einrichtung vorragenden, axial dichtenden Dichtring ausgebildet ist/sind. Bei dieser Ausführung des Flüssigkeitsfilters kann die Dichtplatte oder können die Dichtplatten einfacher ausgeführt werden, da sie keinen einsteckbaren, vorragenden Stutzen benötigen. Auf der anderen Seite ist hier aber eine etwas höhere Festigkeit der Bauteile nötig, um die bei der axialen Abdichtung auftretenden höheren Druckkräfte, die in Richtung der Senkrechten zur Flanschebene wirken, ohne Gefahr von Leckagen aufnehmen zu können.

Eine.weitere Ausgestaltung des erfindungsgemäßen Flüssigkeitsfilters schlägt vor, daß parallel zur Außenkontur des Anschlußflansches in diesem eine umlaufende, axial dichtende Dichtung vorgesehen ist, die die Durchlaßöffnung(en) einschließt. Diese umlaufende Dichtung stellt eine Sicherung gegen einen Austritt von Flüssigkeit in die Umgebung im Falle einer Leckage im Bereich der die Durchlaßöffnung oder Durchlaßöffnungen abdichtenden Dichtung(en) dar.

In weiterer Ausgestaltung ist vorgesehen, daß die zuvor beschriebene umlaufende Dichtung gleichzeitig den oder die jeweils nicht durch die Durchlaßöffnung(en) in der Dichtplatte verlaufenden Flüssigkeitskanäle in der Flanschverbindung abdichtet. In dieser Ausführung erhält die umlaufende Dichtung eine zweite Funktion, was eine einfache Bauweise des Flüssigkeitsfilters in seinem Flanschbereich fördert.

Eine Alternative zu der vorstehend beschriebenen Ausführung des Flüssigkeitsfilters schlägt vor, daß der oder die jeweils nicht durch die Durchlaßöffnung(en) in der Dichtplatte oder den Dichtplatten verlaufenden Flüssigkeitskanäle in der Flanschverbindung separat durch (je) ein eigenes Dichtmittel abdichtet sind und daß die umlaufende Dichtung den oder die jeweils nicht durch die Durchlaßöffnung(en) in der Dichtplatte verlaufenden Flüssigkeitskanäle in der Flanschverbindung einschließt. Diese Ausführung des Flüssigkeitsfilters erfordert zwar eine größere Anzahl von Dichtungen, bietet dafür aber auch eine erhöhte Sicherheit gegen Leckagen von Flüssigkeit in die Umgebung.

Zur Erzielung einer guten und dauerhaften Abdichtung im Bereich der axialen Dichtungen wird weiter vorgeschlagen, daß die axial dichtenden Dichtungen Profildichtungen sind.

Wie weiter oben schon erwähnt, können der Filtersockel oder ein den Sockel umfassendes Filtergehäuse sowie die Dichtplatte wahlweise aus Kunststoff oder Metall hergestellt sein. Für eine Kunststoffausführung ist bevorzugt vorgesehen, daß der Kunststoff Polyamid ist und daß der Filtersockel oder ein den Sockel umfassendes Filtergehäuse und die Dichtplatte(n) als Spritzgußteile hergestellt sind. Polyamid ist ein Kunststoff mit für viele Anwendungen ausreichend hoher mechanischer, thermischer und chemischer Stabilität, wobei gleichzeitig ein geringes Gewicht und relativ geringe Herstellungskosten erzielt werden.

Alternativ ist für Flüssigkeitsfilter aus metallischen Einzelteilen bevorzugt vorgesehen, daß das Metall Aluminium oder Magnesium ist und daß der Filtersockel oder ein den Sockel umfassendes Filtergehäuse und die Dichtplatte(n) als Druckgußteile hergestellt sind. Durch die Verwendung von Aluminium oder Magnesium lassen sich höhere mechanische und thermische Stabilitäten erreichen, was diese Ausführung des Flüssigkeitsfilters für Anwendungen geeignet macht, bei denen besonders hohe Flüssigkeitsdrücke und/oder besonders hohe Flüssigkeitstemperaturen auftreten.

Ausführungsbeispiele der Erfindung werden im folgenden anhand einer Zeichnung erläutert. Die Figuren der Zeichnung zeigen:
- Figur 1: einen als Ölfilter ausgeführten Flüssigkeitsfilter in einer ersten Ausführung im Längsschnitt,
- Figur 2: den Ölfilter aus Figur 1 in Ansicht von unten auf seinen Anschlußflansch und
- Figur 3: den Ölfilter in einer zweiten Ausführung, wieder im Längsschnitt.

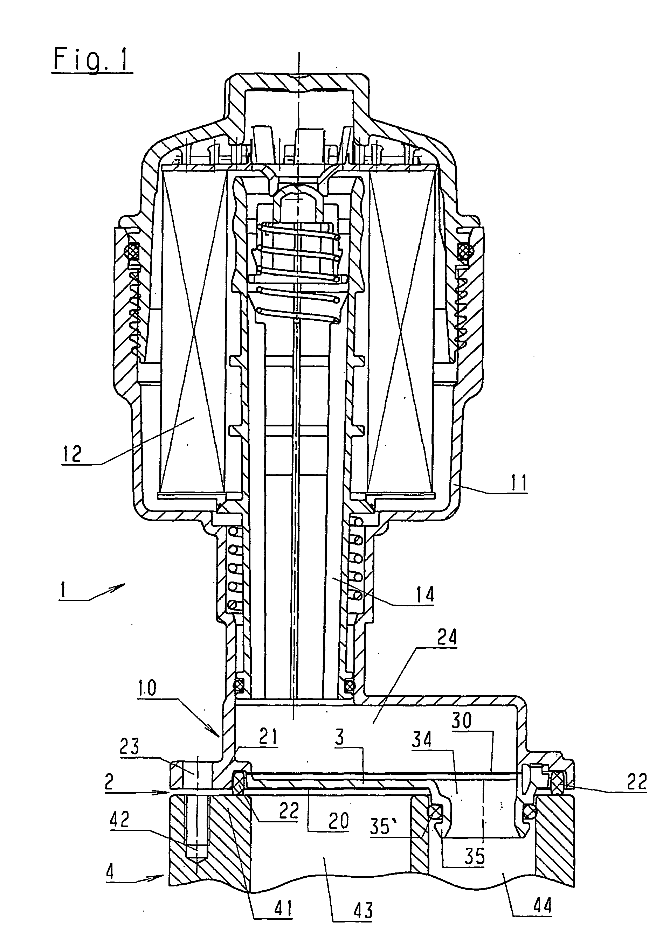

Wie die Figur 1 der Zeichnung zeigt, umfaßt das dargestellte Ausführungsbeispiel eines Ölfilters 1 ein Filtergehäuse 11, mit dem ein Filtersockel 10 einstückig ausgeführt ist. Das Filtergehäuse 11 mit dem Filtersockel 10 ist beispielsweise ein Kunststoff-Spritzgußteil oder ein Leichtmetall-Druckgußteil.

Im Filtergehäuse 11 ist in üblicher Art und Weise ein Filtereinsatz 12 angeordnet, der hier zur Filterung des Schmieröls einer Brennkraftmaschine 4, die hier nur zu einem kleinen Teil dargestellt ist, dient.

Zur Verbindung des Ölfilters 1 mit der Brennkraftmaschine 4 dient eine Flanschverbindung 2, die aus einem Anschlußflansch 21 des Ölfilters 1 und einem Gegenflansch 41 der Brennkraftmaschine 4 besteht. Dabei liegen die Anschlußflansche 21, 41 in einer Ebene 20 der Flanschverbindung 2 dichtend aneinander an.

In der Schnittdarstellung gemäß Figur 1 ist im Bereich des Filtersockels 10 ein Ölkanalabschnitt 24 des Ölkanals 14 sichtbar, wobei dieser Kanal zur Rückführung von gefiltertem Schmieröl aus dem Ölfilter 1 zur Brennkraftmaschine 4 dient.

Ein Kanal zur Zuführung von zu filterndem Schmieröl von der Brennkraftmaschine 4 zum Ölfilter 1 liegt oberhalb der Schnittebene vor den in Figur 1 sichtbaren Teilen des Ölfilters 1 und ist deshalb in Figur 1 nicht sichtbar.

Der Filtersockel 10 ist zunächst zum Gegenflansch 41 hin offen ausgebildet und auf diese Weise bei einem spritztechnischen Herstellungsvorgang problemlos entformbar. Anschließend ist der zum Gegenflansch 41 hin zunächst offene Bereich des Filtersockels 10 im Bereich des Ölkanalabschnitts 24 durch eine Dichtplatte 3 bis auf eine Durchlaßöffnung 34 dicht verschlossen. Hierzu ist die Dichtplatte 3 in den zum Gegenflansch 41 liegenden Bereich des Filtersockels 10 und des darin verlaufenden Ölkanalabschnitts 24 eingesetzt und umlaufend dicht mit dem übrigen Filtersockel 10 verbunden, hier mittels einer Schweißnaht 30.

Die Durchlaßöffnung 34 in der Dichtplatte 3 ist hier in Form eines zur Brennkraftmaschine 4 hin vorragenden Stutzens 35 mit einer am Außenumfang umlaufenden Nut mit einem O-Ring 35' als radial dichtendes Dichtmittel ausgeführt. Im zusammengebauten Zustand von Ölfilter 1 und Brennkraftmaschine 4 ragt der Stutzen 35 in einen Ölkanal 44 im Gegenflansch 41 der Brennkraftmaschine 4 hinein und ist gegen die Wände des Ölkanals 44 durch den O-Ring 35' flüssigkeitsdicht abgedichtet.

Innerhalb der Flanschverbindung 2 ist zumindest ein weiterer Ölkanal, durch den Öl von der Brennkraftmaschine 4 zum Ölfilter 1 führbar ist, verbunden, wobei diese Verbindung oberhalb der Schnittebene der Figur 1 liegt und deshalb nicht sichtbar ist.

Zusätzlich ist bei dem Ausführungsbeispiel gemäß Figur 1 die Flanschverbindung 2 durch eine radial außen im Bereich der Flanschverbindung 2 umlaufende Profildichtung 22, die ein axial dichtendes Dichtmittel bildet, abgedichtet. Diese Dichtung 22 bildet eine Sicherung im Falle von eventuellen Leckagen im Bereich des O-Ringes 35'.

Links von dem Ölkanal 44 liegt im Bereich des Gegenflansches 41 der Brennkraftmaschine 4 ein Hohlraum 43, bei dem es sich beispielsweise um einen drucklosen, mit der Ölwanne der Brennkraftmaschine 4 verbundenen Kanal handeln kann. Im Falle einer Leckage des O-Ringes 35' nimmt der Hohlraum oder Kanal 43 austretendes Ö1 auf, ohne daß es in die Umgebung gelangen kann.

Zur mechanischen Verbindung des Filtersockels 10 mit der Brennkraftmaschine 4 dienen mehrere Schrauben, die durch Schraubenlöcher 23 des Filtersockels 10 in Gewindebohrungen 42 im Gegenflansch 41 der Brennkraftmaschine 4 eingedreht werden können.

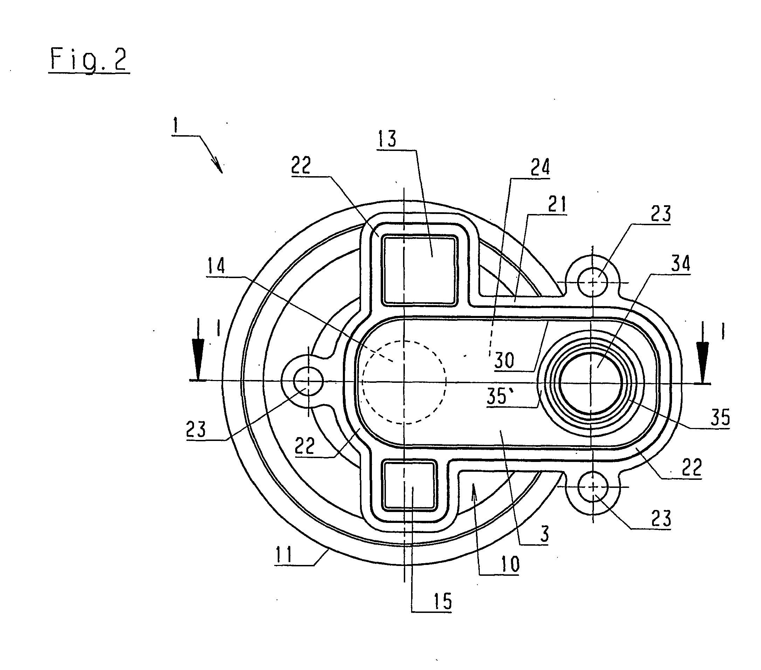

Figur 2 zeigt den Ölfilter 1 aus Figur 1 in Ansicht von unten auf seinen Anschlußflansch 21.

Im Hintergrund der Figur 2 liegt das Filtergehäuse 11; dem Betrachter zugewandt liegt im Vordergrund der Filtersockel 10. Vom Zentrum des Filtersockels 10 erstreckt sich nach rechts hin die in den Filtersockel 10 dichtend eingesetzte Dichtplatte 3, die mit dem übrigen Filtersokkel 10 entlang der Schweißnaht 30 dicht verbunden ist. Rechts in der Dichtplatte 3 liegt die Durchlaßöffnung 34 in Form des zum Betrachter hin vorragenden Stutzens 35 mit seinem radial dichtenden O-Ring 35' auf seinem Außenumfang.

Von der Dichtplatte 3 verdeckt liegt im Zentrum des Filtersockels 10 und des Filtergehäuses 11 der Ölkanal 14, der hier nur gestrichelt dargestellt ist und der gefiltertes Öl vom Ölfilter 1 in den ebenfalls durch die Dichtplatte 3 verdecktem Ölkanalabschnitt 24 und von dort durch die Durchlaßöffnung 34 zur hier nicht sichtbaren Brennkraftmaschine 4 führt.

Oberhalb der Dichtplatte 3 liegt als weiterer Kanal ein zweiter Ölkanal 13, der ebenfalls im Anschlußflansch 21 mit der Brennkraftmaschine verbindbar ist und der zur Führung von Schmieröl von der Brennkraftmaschine zum Ölfilter 1 dient.

Das Ausführungsbeispiel gemäß Figur 1 und Figur 2 umfaßt weiterhin einen dritten Ölkanal 15, der als druckloser Ablaßkanal zur Entleerung des Filtergehäuses 11 bei einem Filtereinsatzwechsel dient. Auch der Ablaßkanal 15 liegt im Anschlußflansch 21 und wird in diesem mit einem passend positionierten Kanal der Brennkraftmaschine 4 verbunden, der vorzugsweise als druckloser Kanal zur Ölwanne der Brennkraftmaschine führt.

Links seitlich am Filtersockel 10 sowie rechts oben und unten am Filtersockel 10 liegen insgesamt drei Schraubenlöcher 23, die zur mechanischen Verbindung des Ölfilters 1 mit der Brennkraftmaschine mittels nicht dargestellter Schrauben dienen.

Um den Anschlußflansch 21 herum verläuft unter Einschluß der Ölkanäle 13 und 15 weiterhin als einstückige Dichtung die umlaufende Profildichtung 22. Die Dichtung 22 wirkt als axial dichtendes Dichtmittel und ist in eine im Anschlußflansch 21 ausgebildete Nut eingelegt, deren Tiefe geringer ist als die Höhe der Dichtung 22 in ihrem entspannten Zustand.

Die Figur 2 verdeutlicht besonders anschaulich, daß bei dem Ölfilter 1 mit Hilfe der einfachen und ein preiswertes Bauteil darstellenden Dichtplatte 3 ein Versatz zwischen dem Ölkanal 14 und der Durchlaßöffnung 34 zum Gegenflansch der Brennkraftmaschine überbrückbar ist, wodurch auf einfache Weise eine Anpassung der Lage der Ölkanäle innerhalb des Arischlußflansches 21 des Filtersokkels 10 an ein auf der Seite der Brennkraftmaschine vorgegebene Anschlußbild möglich ist.

Außerdem sorgt die Dichtplatte 3 dafür, daß der im Ölkanalabschnitt 24 wirkende Öldruck innerhalb der FlanschVerbindung 2 keine großen in einer Richtung senkrecht zur Ebene 20 der Flanschverbindung 2 auf den Filtersockel 10 wirkenden Kräfte erzeugen kann, die die Flanschverbindung 2 mechanisch stark belasten würden.

Bei dem Ausführungsbeispiel des Ölfilters 1 gemäß Figur 1 und Figur 2 ist die Dichtplatte 3 ein mit Ausnahme des Stutzens 35 flaches Bauteil, das parallel zur Ebene 20 der Flanschverbindung 2 im Filtersockel 10 angeordnet ist.

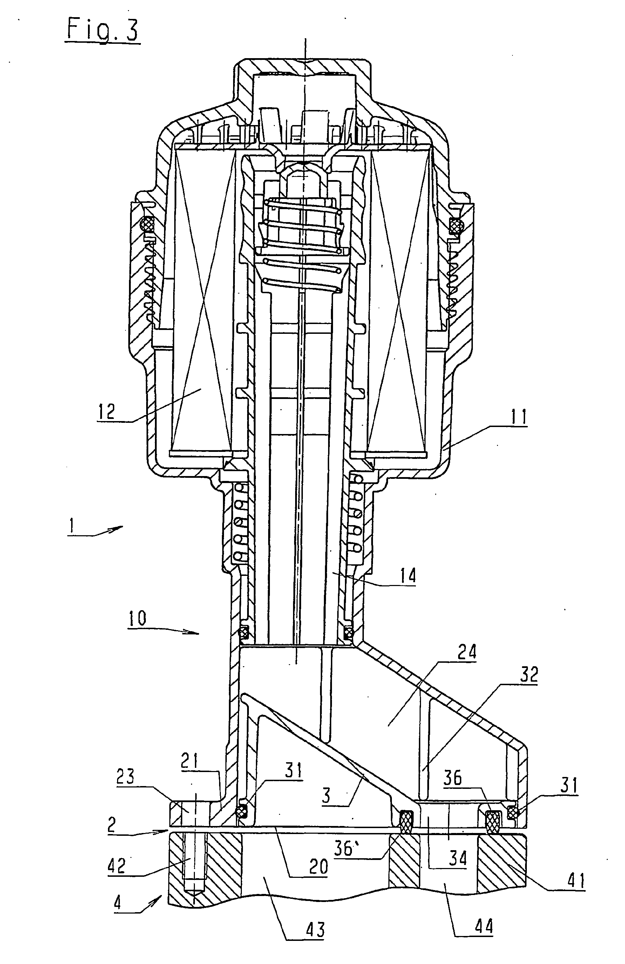

Das in Figur 3 dargestellte zweite Ausführungsbeispiel des Ölfilters 1 besitzt einen geometrisch anders gestalteten Filtersockel 10 und dazu passend auch eine geometrisch anders ausgestaltete Dichtplatte 3.

Das Filtergehäuse 11 mit dem Filtereinsatz 12 entspricht bei dem Ausführungsbeispiel gemäß Figur 3 der Ausführung gemäß Figur 1.

Auch bei dem Beispiel gemäß Figur 3 wird das von dem Filtereinsatz 12 im Filtergehäuse 11 gefilterte Schmieröl durch den zentralen Ölkanal 14 vom Filtereinsatz 12 zunächst zum Filtersockel 10 geleitet. Im Filtersockel 10 befindet sich auch hier ein zunächst zum Anschlußflansch 21 hin offener Ölkanalabschnitt 24. Dieser Ölkanalabschnitt 24 ist hier ebenfalls durch die Dichtplatte 3 mit Ausnahme einer darin vorgesehenen Durchlaßöffnung 34 dicht verschlossen. Die Dichtplatte 3 ist auch hier dichtend in den Filtersockel 10 und in den darin verlaufenden Ölkanalabschnitt 24 eingesetzt.

Im Unterschied zu dem Ausführungsbeispiel gemäß Figur 1 und Figur 2 ist bei dem Beispiel gemäß Figur 3 die Dichtplatte 3 unter Zwischenlage einer radial außen umlaufenden Dichtung 31 dichtend in den Ölkanalabschnitt 24 eingesteckt.

In Anpassung an den schrägen Verlauf der rechts oben am Filtersockel 10 vorgesehenen, den Ölkanalabschnitt 24 oben begrenzenden Wand verläuft die Dichtplatte 3 etwa parallel dazu ebenfalls mit einer schrägen Ausrichtung. Hierdurch werden günstige Strömungsverhältnisse mit weniger scharfen Strömungsumlenkungen als mit dem Ausführungsbeispiel gemäß Figur 1 und Figur 2 für das Öl erreicht.

Die Durchlaßöffnung 34 in der Dichtplatte 3 liegt dekkungsgleich zu dem Ölkanal 44 im Gegenflansch 41 der Brennkraftmaschine 4. Durch den Ölkanal 44 wird das im Ölfilter 1 gefilterte Schmieröl den Schmierstellen der Brennkraftmaschine zugeführt.

Links von dem Ölkanal 44 liegt auch hier in der Brennkraftmaschine 4 ein Hohlraum oder druckloser Kanal 43, der durch die Dichtplatte 3 von dem Ölkanalabschnitt 24 im Filtersockel 10 getrennt ist.

Um die Durchlaßöffnung 34 herum liegt in einer Nut 36 ein axial dichtender Dichtring 36', der einen Austritt von Schmieröl im Bereich der Flanschverbindung 2 in die Umgebung verhindert.

Zur mechanischen Verbindung zwischen Ölfilter 1 und Brennkraftmaschine 4 sind auch hier im Filtersockel 10 mehrere Schraubenlöcher 23 und in der Brennkraftmaschine 4 mehrere Gewindebohrungen 42 vorgesehen, von denen in Figur 3 jeweils nur eine sichtbar ist.

Wie erläutert, ist bei dem Beispiel gemäß Figur 3 die Dichtplatte 3 unter Zwischenlage des Dichtringes 31 in den Ölkanalabschnitt 24 eingesetzt. Zur exakten Positionierung und zur Abstützung der Dichtplatte 3 sind im Ölkanalabschnitt 24 mehrere Rippen 32 vorgesehen, an deren unterem Ende sich die Dichtplatte 3 jeweils in Richtung nach oben hin abstützt.

Eine Abstützung in entgegengesetzter Richtung, gemäß Figur 3 nach unten hin, erfährt die Dichtplatte 3 im angebauten Zustand des Ölfilters 1 durch den Gegenflansch 41 der Brennkraftmaschine 4, so daß im zusammengebauten Zustand die Dichtplatte 3 trotz des Fehlens einer festen Verbindung, wie Schweißverbindung, sicher und exakt positioniert ist und bleibt.

Auch bei dem Ausführungsbeispiel des Ölfilters 1 gemäß Figur 3 wird mit Hilfe der Dichtplatte 3 ein Versatz zwischen der Lage des Ölkanals 14 im Ölfilter 1 und der Lage des Ölkanals 44 in der Brennkraftmaschine 4 überbrückt, wobei die Dichtplatte 3 ein einfaches und kostengünstiges Bauteil darstellt. Bei Bedarf kann mit Hilfe einer einzelnen, entsprechend größeren Dichtplatte 3 oder mit Hilfe von mehreren einzelnen, kleineren Dichtplatten 3 auch ein Versatz zwischen dem Ölkanal 13 und dem zugehörigen Ölkanal in der Brennkraftmaschine 4 und/oder ein Versatz zwischen dem Ablaßkanal 15 und dem zugehörigen Kanal in der Brennkraftmaschine 4 überbrückt werden, sofern dies konstruktiv erforderlich wird.

## Patentansprüche

1. Flüssigkeitsfilter (1), insbesondere Öl- oder Kraftstoffilter für eine Brennkraftmaschine, mit einem Filtersockel (10), der mit einem Anschlußflansch (21) ausgebildet ist, der mit einem Gegenflansch (41) an einer zugehörigen Einrichtung (4), insbesondere an einer Brennkraftmaschine, dichtend verbindbar ist, wobei durch die Flanschverbindung (2) mindestens je ein Flüssigkeitskanal (13, 14) für die Zuführung von zu filternder Flüssigkeit von der Einrichtung (4) zum Flüssigkeitsfilter (1) und für die Abführung von gefilterter Flüssigkeit vom Filter (1) zur Einrichtung (4) verläuft, wobei im Filtersockel (10) zumindest ein Abschnitt (24) wenigstens eines Flüssigkeitskanals (14) zum Gegenflansch (41) hin durch eine Dichtplatte (3) verschließbar ist, die mit mindestens einer gegen den Gegenflansch (41) abgedichteten, mit einem einrichtungsseitigen Flüssigkeitskanal (44) fluchtenden Durchlaßöffnung (34) ausgebildet ist,
**dadurch gekennzeichnet,**
**daß** in der Ebene (20) der Flanschverbindung (2) gesehen die Fläche der Dichtplatte (3) kleiner ist als die Fläche des Anschlußflansches (21) und daß die Dichtplatte (3) dichtend in den Filtersockel (10) eingesetzt ist und einen Teil des Filtersockels (10) bildet.

2. Flüssigkeitsfilter nach Anspruch 1, **dadurch gekennzeichnet, daß** durch die Flanschverbindung (2) als dritter Flüssigkeitskanal ein druckloser Ablaßkanal (15) für eine Entleerung des Flüssigkeitsfilters (1) bei einem Filtereinsatzwechsel verläuft.

3. Flüssigkeitsfilter nach Anspruch 1 oder 2, **dadurch gekennzeichnet, daß** zwei oder drei separate Dichtplatten (3) vorgesehen sind, wobei jeweils eine Dichtplatte (3) einem oder zwei der durch die Flanschverbindung (2) verlaufenden Flüssigkeitskanäle (13, 14, 15) zugeordnet ist.

4. Flüssigkeitsfilter nach einem der Ansprüche 1 bis 3, **dadurch gekennzeichnet, daß** der Filtersockel (10) und die Dichtplatte(n) (3) Teile aus Kunststoff sind und daß die Dichtplatte(n) (3) mit dem übrigen Filtersockel (10) durch Schweißen oder Kleben verbunden ist/sind.

5. Flüssigkeitsfilter nach Anspruch 4, **dadurch gekennzeichnet, daß** die Dichtplatte(n) (3) an ihrer Durchlaßöffnung (34) oder ihren Durchlaßöffnungen (34) mit' (je) einem in Richtung zum Gegenflansch (41) vorragenden, in den einrichtungsseitigen Flüssigkeitskanal (44) einsteckbaren Stutzen (35) mit einem radial dichtenden Dichtring (35') ausgebildet ist/sind.

6. Flüssigkeitsfilter nach Anspruch 1 oder 2, **dadurch gekennzeichnet, daß** der Filtersockel (10) und die Dichtplatte(n) (3) Teile aus Kunststoff oder aus Metall sind und daß die Dichtplatte (n) (3) unter Zwischenlage (je) eines umlaufenden, radial oder axial dichtenden Dichtrings (31) in den übrigen Filtersokkel (10) eingesteckt und in diesem fixiert ist/sind.

7. Flüssigkeitsfilter nach Anspruch 5 oder 6, **dadurch gekennzeichnet, daß** die radial dichtenden Dichtringe (31, 35') Standard-O-Ringe sind.

8. Flüssigkeitsfilter nach Anspruch 6 oder 7, **dadurch gekennzeichnet, daß** die Dichtplatte(n) (3) an ihrer Durchlaßöffnung (34) oder ihren Durchlaßöffnungen (34) mit (je) einem diese umgebenden, in Richtung zum Gegenflansch (41) vorragenden, axial dichtenden Dichtring (36') ausgebildet ist/sind.

9. Flüssigkeitsfilter nach einem der vorhergehenden Ansprüche, **dadurch gekennzeichnet, daß** parallel zur Außenkontur des Anschlußflansches (21) in diesem eine umlaufende, axial dichtende Dichtung (22) vorgesehen ist, die die Durchlaßöffnung(en) (34) einschließt.

10. Flüssigkeitsfilter nach Anspruch 9, **dadurch gekennzeichnet, daß** die Dichtung (22) gleichzeitig den oder die jeweils nicht durch die Durchlaßöffnung(en) (34) in der Dichtplatte (3) verlaufenden Flüssigkeitskanäle (13, 15) in der Flanschverbindung (2) abdichtet.

11. Flüssigkeitsfilter nach Anspruch 9, **dadurch gekennzeichnet, daß** der oder die jeweils nicht durch die Durchlaßöffnung(en) (34) in der Dichtplatte (3) oder den Dichtplatten (3) verlaufenden Flüssigkeitskanäle (13, 15) in der Flanschverbindung (2) separat durch (je) ein eigenes Dichtmittel abdichtet sind und daß die Dichtung (22) den oder die jeweils nicht durch die Durchlaßöffnung(en) (34) in der Dichtplatte (3) verlaufenden Flüssigkeitskanäle (13, 15) in der Flanschverbindung (2) einschließt.

12. Flüssigkeitsfilter nach einem der Ansprüche 8 bis 11, **dadurch gekennzeichnet, daß** die axial dichtenden Dichtungen (22, 36') Profildichtungen sind.

13. Flüssigkeitsfilter nach einem der Ansprüche 4 bis 8, **dadurch gekennzeichnet, daß** der Kunststoff Polyamid ist und daß der Filtersockel (10) oder ein den Sokkel (10) umfassendes Filtergehäuse (11) und die Dichtplatte(n) (3) als Spritzgußteile hergestellt sind.

14. Flüssigkeitsfilter nach einem der Ansprüche 6 bis 8, **dadurch gekennzeichnet, daß** das Metall Aluminium oder Magnesium ist und daß der Filtersockel (10) oder ein den Sockel (10) umfassendes Filtergehäuse (11) und die Dichtplatte(n) (3) als Druckgußteile hergestellt sind.

## Claims

1. Liquid filter (1), especially oil or fuel filter for an internal combustion engine, with a filter base (10) which is designed with a connecting flange (21) which can be sealably connected with a companion flange (41) to an associated device (4), especially to an internal combustion engine, with at least one liquid channel (13, 14) each extending through the flange connection (2) for supplying liquid to be filtered from the device (4) to the liquid filter (1) and for discharging filtered liquid from filter (1) to the device (4), and with at least one section (24) of at least one liquid channel (14) - in the filter base (10) - being closable towards the companion flange (41) by means of a gasket sheet (3) which is designed with at least one transmission opening (34) sealed against the companion flange (41) and in alignment with a device-side liquid channel (44),
**characterized in that** - seen in the plane (20) of the flange connection (2) - the surface of the gasket sheet (3) is smaller than the surface of the connecting flange (21) and that the gasket sheet (3) is sealingly inserted in the filter base (10) and forms one part of the filter base (10).

2. Liquid filter according to claim 1, **characterized in that** a gravity-flow drain channel (15) extends through the flange connection (2) as a third liquid channel for drainage of the liquid filter (1) upon a filter element change.

3. Liquid filter according to claim 1 or 2, **characterized in that** two or three separate gasket sheets (3) are provided, with one gasket sheet (3) each being allocated to one or two of the liquid channels (13, 14, 15) extending through the flange connection (2).

4. Liquid filter according to any one of the claims 1 to 3, **characterized in that** the filter base (10) and the gasket sheet(s) (3) are parts of plastic and that the gasket sheet(s) (3) is/are connected with the remaining filter base (10) by welding or gluing.

5. Liquid filter according to claim 4, **characterized in that** the gasket sheet(s) (3), at its transmission opening (34) or their transmission openings (34), is/are designed with one nozzle (35) (each) - with a radially sealing washer (35') - insertable into the device-side liquid channel (44) and protruding in the direction of the companion flange (41).

6. Liquid filter according to claim 1 or 2, **characterized in that** the filter base (10) and the gasket sheet(s)(3) are parts of plastic or of metal and that the gasket sheet(s)(3) - with the intermediate layer of one circumferential, radially or axially sealing washer (31)(each) - is/are inserted and fixed into the remaining filter base (10).

7. Liquid filter according to claim 5 or 6, **characterized in that** the radially sealing washers (31, 35') are standard O-rings.

8. Liquid filter according to claim 6 or 7, **characterized in that** the gasket sheet(s) (3), at its transmission opening (34) or their transmission openings (34), is/are designed with one axially sealing gasket (36') (each) surrounding them and protruding in the direction of the companion flange (41).

9. Liquid filter according to any one of the preceding claims, **characterized in that**, parallel to the outside contour of the connecting flange (21), an axially sealing gasket (22) is provided circumferentially in it which encloses the transmission opening (s) (34).

10. Liquid filter according to claim 9, **characterized in that** the gasket (22) simultaneously seals the liquid channel(s) (13, 15) in the flange connection (2) which is/are each not extending through the transmission opening(s) (34) in the gasket sheet (3).

11. Liquid filter according to claim 9, **characterized in that** the liquid channel or the liquid channels (13, 15) in the flange connection (2) each not extending through the transmission opening(s) (34) in the gasket sheet (3) or in the gasket sheets (3) are separately sealed (each) by an own sealing agent, and that the gasket (22) encloses the liquid channel or the liquid channels (13, 15) in the flange connection (2) each not extending through the transmission opening(s) (34) in the gasket sheet (3).

12. Liquid filter according to any one of the claims from 8 to 11, **characterized in that** the axially sealing gaskets (22, 36') are profile gaskets.

13. Liquid filter according to any one of the claims from 4 to 8, **characterized in that** the plastic is polyamide and that the filter base (10) or a filter housing (11) comprising the base (10), and the gasket sheet(s) (3) are manufactured as injection molded parts.

14. Liquid filter according to any one of the claims from 6 to 8, **characterized in that** the metal is aluminum or magnesium and that the filter base (10) or a filter housing (11) comprising the base (10), and the gasket sheet(s)(3) are manufactured as die-cast parts.

## Revendications

1. Filtre à liquide (1), en particulier filtre à huile ou à carburant pour moteur à combustion interne, comprenant un socle de filtre (10) qui est réalisé avec un flasque de raccordement (21), lequel peut être assemblé de manière étanche avec un contre-flasque (41) sur un dispositif associé (4), en particulier sur un moteur à combustion interne, au moins respectivement un canal à liquide (13, 14), destiné à amener du liquide à filtrer du dispositif (4) au filtre à liquide (1) et à évacuer du liquide filtré du filtre (1) vers le dispositif (4), traversant l'assemblage des flasques (2), au moins une section (24) d'au moins un canal à liquide (14) pouvant, dans le socle du filtre (10), être obturée en direction du contre-flasque (41) par une plaque d'étanchéité (3) qui est réalisée avec au moins un orifice de passage (34) rendu étanche par rapport au contre-flasque (41) et est en alignement avec un canal à liquide côté dispositif (44), **caractérisé en ce que**, vue dans le plan (20) de l'assemblage des flasques (2), la surface de la plaque d'étanchéité (3) est inférieure à la surface du flasque de raccordement (21) et **en ce que** la plaque d'étanchéité (3) est placée dans le socle du filtre (10) de manière à étanchéifier et constitue une partie du socle du filtre (10).

2. Filtre à liquide selon la revendication 1, **caractérisé en ce qu'**un canal de vidange (15) exempt de pression, destiné à vider le filtre à liquide (1) lors d'un remplacement de l'insert filtrant, passe par l'assemblage des flasques (2) en tant que troisième canal à liquide.

3. Filtre à liquide selon la revendication 1 ou 2, **caractérisé en ce que** sont prévues deux ou trois plaques d'étanchéité (3) séparées, respectivement une plaque d'étanchéité (3) étant associée à un ou deux des canaux à liquide (13, 14, 15) qui passent par l'assemblage des flasques (2).

4. Filtre à liquide selon l'une des revendications 1 à 3, **caractérisé en ce que** le socle du filtre (10) et la (les) plaque(s) d'étanchéité (3) sont des pièces en matière plastique et **en ce que** la (les) plaque(s) d'étanchéité (3) est (sont) assemblée(s) au reste du socle du filtre (10) par soudage ou par collage.

5. Filtre à liquide selon la revendication 4, **caractérisé en ce que** la (les) plaque(s) d'étanchéité (3) est (sont) réalisée(s), au niveau de son (leur) orifice de passage (34) ou de ses (leurs) orifices de passage (34), avec (respectivement) un embout (35) avec une bague d'étanchéité (35') pour étanchéification radiale, lequel fait saillie en direction du contre-flasque (41) et est enfichable dans le canal à liquide côté dispositif (44).

6. Filtre à liquide selon la revendication 1 ou 2, **caractérisé en ce que** le socle du filtre (10) et la (les) plaque(s) d'étanchéité (3) sont des pièces en matière plastique ou en métal et **en ce que** la (les) plaque(s) d'étanchéité (3) est (sont) emboîtée(s) dans le reste du socle du filtre (10), (respectivement) une bague d'étanchéité (31) pour étanchéification périphérique, radiale ou axiale étant intercalée, et est (sont) fixée(s) dans celui-ci.

7. Filtre à liquide selon la revendication 5 ou 6, **caractérisé en ce que** les bagues d'étanchéité pour étanchéification radiale (31, 35') sont des joints toriques standard.

8. Filtre à liquide selon la revendication 6 ou 7, **caractérisé en ce que** la (les) plaque(s) d'étanchéité (3) est (sont) réalisée(s), au niveau de son (leur) orifice de passage (34) ou de ses (leurs) orifices de passage (34), avec (respectivement) une bague d'étanchéité (36') pour étanchéification axiale, l'entourant (les entourant) et faisant saillie en direction du contre-flasque (41).

9. Filtre à liquide selon l'une des revendications précédentes, **caractérisé en ce qu'**est prévu, parallèlement au contour extérieur du flasque de raccordement (21), dans celui-ci, un joint périphérique d'étanchéification axiale (22) qui entoure l'orifice (les orifices) de passage (34).

10. Filtre à liquide selon la revendication 9, **caractérisé en ce que** le joint (22) rend étanche en même temps, dans l'assemblage des flasques (2), le ou les canaux à liquide (13, 15) qui, respectivement, ne traversent pas l'orifice (les orifices) de passage (34) dans la plaque d'étanchéité (3).

11. Filtre à liquide selon la revendication 9, **caractérisé en ce que** le ou les canaux à liquide (13, 15) qui, respectivement, ne traversent pas l'orifice (les orifices) de passage (34) dans la plaque d'étanchéité (3) ou les plaques d'étanchéité (3) sont rendus étanches séparément par (respectivement) un propre moyen d'étanchéité et **en ce que** le joint (22) entoure, dans l'assemblage des flasques (2), le ou les canaux à liquide (13, 15) qui, respectivement, ne traversent pas l'orifice (les orifices) de passage (34) dans la plaque d'étanchéité (3).

12. Filtre à liquide selon l'une des revendications 8 à 11, **caractérisé en ce que** les joints d'étanchéification axiale (22, 36') sont des joints profilés.

13. Filtre à liquide selon l'une des revendications 4 à 8, **caractérisé en ce que** la matière plastique est du polyamide et **en ce que** le socle du filtre (10) ou un boîtier du filtre (11) contenant le socle (10) et la (les) plaque(s) d'étanchéité (3) sont fabriquées sous la forme de pièces moulées par injection.

14. Filtre à liquide selon l'une des revendications 6 à 8, **caractérisé en ce que** le métal est de l'aluminium ou du magnésium et **en ce que** le socle du filtre (10) ou un boîtier du filtre (11) contenant le socle (10) et la (les) plaque(s) d'étanchéité (3) sont fabriquées sous la forme de pièces moulées par injection.
